# FASCICULE DE BREVET EUROPEEN

(11) **EP 1 876 728 B1**
(45) Date de publication et mention de la délivrance du brevet: **01.01.2014**
(21) Numéro de dépôt: 06291127.6
(22) Date de dépôt: 07.07.2006
(51) Int. Cl.: H04B 7/155

(54) **Procédé de synchronisation de deux dispositifs électroniques d'une liaison sans fil, notamment d'un réseau de téléphonie mobile et système de mise en oeuvre de ce procédé**
Verfahren zur Synchronisierung von zwei elektronischen Geräten mit einer drahtlosen Verbindung, insbesondere in einem Mobiltelefonnetz, und System zur Umsetzung dieses Verfahrens
Synchronisation method for two electronic devices over a wireless connection, in particular over a mobile telephone network, as well as a system to implement said procedure

(43) Date de publication de la demande: 09.01.2008
(73) Titulaire: E-Blink, 91800 Boussy Saint Antoine (FR)
(72) Inventeur: Rolland, Alain, 91480 Quincy Sous Senart (FR); Blanc, Stéphane, 91650 Breuillet (FR); Plumecoq, Jean-Christophe, 91120 Palaiseau (FR)
(74) Mandataire: Thinat, Michel

(56) Documents cités:
- EP-A- 1 501 215
- EP-A- 1 648 099
- DE-A1- 3 108 901
- US-A1- 2006 105 705
- US-B1- 6 349 214

## Description

L'invention concerne un procédé de synchronisation de deux dispositifs électroniques d'une liaison de transmission de signaux électriques, sans fil, notamment d'un réseau de téléphonie mobile, selon lequel l'information de synchronisation est transmise d'un dispositif à l'autre. L'invention concerne également un système pour la mise en oeuvre de ce procédé.

Les normes en vigueur pour des réseaux de téléphonie mobile ne tolèrent qu'une erreur de fréquence inférieure à quelques millionièmes de la fréquence des signaux. Cette exigence nécessite une synchronisation parfaite des deux dispositifs. Il est connu de réaliser la synchronisation directement sur la trame de données et de récupérer l'horloge à la réception. Mais la stabilité de fréquence ainsi obtenue s'avère être insuffisante.

Le document US 2006/0105705 décrit un procédé selon le préambule de la revendication 1.

L'invention a pour but de palier cet inconvénient.

Pour atteindre ce but, le procédé selon l'invention est caractérisé en ce que l'on transmet l'horloge directement d'un dispositif à l'autre et utilise cette horloge, après récupération, pour la synchronisation du dispositif de réception.

Selon une caractéristique de l'invention, le procédé est caractérisé en ce que l'on transmet le signal d'horloge sous une forme numérique.

Selon une autre caractéristique de l'invention, le procédé est caractérisé en ce que l'on établit dans le dispositif émetteur la valeur numérique du signal pilote, module la valeur numérique sur ce signal pilote et transmet ce dernier modulé par sa valeur numérique au dispositif récepteur.

Selon encore une autre caractéristique de l'invention, le procédé est caractérisé en ce que l'on module sur le signal pilote une trame comportant en plus de la valeur numérique du signal pilote d'autres informations.

Le système pour la mise en oeuvre du procédé selon l'invention est caractérisé en ce que le dispositif récepteur comprend essentiellement un composant d'oscillateur local générateur de la fréquence de référence, qui est commandé par des moyens comparateurs du signal d'horloge reçu audit signal de référence.

Selon une caractéristique de l'invention, le système est caractérisé en ce que le dispositif récepteur comporte un convertisseur analogique numérique et en ce que le composant de commande de l'oscillateur local comporte des compteurs du signal d'horloge numérique et du signal de référence et des moyens comparateurs des deux compteurs, l'oscillateur local étant commandé par un signal établi à partir du résultat du comparateur.

Selon une autre caractéristique de l'invention, le système est caractérisé en ce que, dans le cas d'un signal de fréquence de pilote élevée, le dispositif récepteur comporte un mélangeur dont l'oscillateur est contrôlé à partir de l'oscillateur générateur du signal de référence.

Selon encore une autre caractéristique de l'invention, le système est caractérisé en ce que le dispositif émetteur comporte des moyens modulateurs du signal pilote d'horloge par la valeur numérique du signal d'horloge et en ce que le dispositif récepteur comporte des moyens de démodulateurs.

Selon encore une autre caractéristique de l'invention, le système est caractérisé en ce que les moyens modulateurs du signal pilote sont adaptés pour moduler sur celui-ci une trame comportant d'autres informations en plus de la valeur numérique du signal d'horloge.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1 est une vue schématique illustrant la structure d'un système de communication sans fil auquel l'invention est applicable ;
- la figure 2 est une vue schématique illustrant la disposition d'une fréquence d'horloge dans le spectre de fréquence d'une liaison bi directionnelle d'un système de communication sans fil selon la figure 1, conformément à l'invention ;
- la figure 3 est une vue schématique d'un premier mode de réalisation d'un dispositif de synchronisation d'horloges selon l'invention ;
- la figure 4 est une vue schématique illustrant un deuxième mode de réalisation d'un dispositif de synchronisation d'horloges selon l'invention ;
- la figure 5 est une vue schématique illustrant un troisième mode de réalisation d'un dispositif de synchronisation d'horloges selon l'invention, et
- la figure 6 est une vue schématique illustrant un quatrième mode de réalisation d'un dispositif de synchronisation d'horloge selon l'invention.

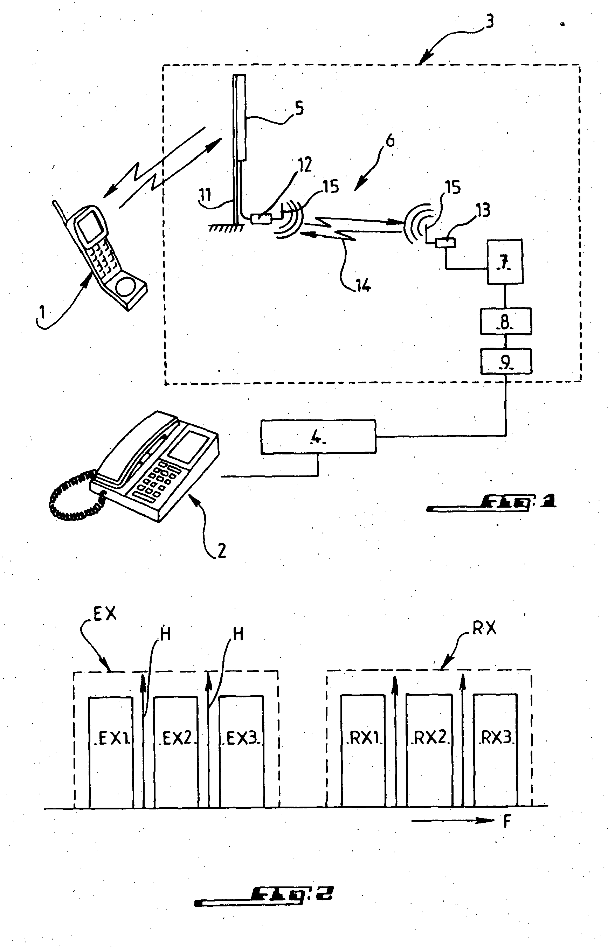

Le procédé selon l'invention, dans ses différents modes de réalisation et dispositifs de mise en oeuvre de ces modes de procédé est utilisable avantageusement dans le cadre d'un système de transmission sans fil tel que représenté, à titre d'exemple, à la figure 1. Cette figure illustre un système de communication entre un téléphone mobile 1 et un téléphone fixe 2 par l'intermédiaire d'un réseau de téléphonie mobile 3 et d'un réseau fixe. A l'intérieur du réseau de téléphonie mobile 3, la communication passe par une antenne relais 5 destinée à communiquer avec le téléphone mobile 1, une liaison de transmission de données 6 et une baie de radio communication 7 appelée généralement BTS (Base Transceiver System) d'une station de base fixe qui comporte en outre une station de contrôle de base 8 appelée communément BSC (Base Station Control) et un centre de communication 9 appelé MSC (Mobile Switching Center). La liaison sans fil entre l'antenne 5 et la baie BTS 7 comporte un dispositif électronique en forme d'un boîtier électronique 12 associé à l'antenne relais 5 et un dispositif électronique en forme d'un boîtier électronique 13 associé à la baie BTS. La transmission des signaux entre ces deux boîtiers se fait par signaux de radiofréquence, c'est à dire sans fil, comme cela est illustré par la référence 14. Un tel système est décrit dans le document WO 2005/05107.

L'invention concerne la synchronisation des deux boîtiers 12, 13 pour assurer une haute stabilité de fréquence des signaux échangés.

Comme le montre la figure 2, une liaison bidirectionnelle du type de la liaison 6 comporte au moins une voie comprenant un canal d'émission EX et un canal de réception RX et, de façon générale, une pluralité de voies bi-directionnelles à deux canaux EX, RX. Comme on le voit sur la figure, les canaux EX de ces voies, d'une part, et les canaux RX, d'autre part, sont groupés. Ainsi la figure montre un groupe de trois canaux EX1 , EX2 , EX3 et un groupe de trois canaux de réception RX1, RX2 et RX3.

Conformément à l'invention, la synchronisation des boîtiers électroniques 12 et 13 du réseau 3 est réalisée par la transmission directe de l'information d'horloge H d'un boîtier à l'autre, par exemple du boîtier 13 au boîtier 12 et la récupération de l'horloge à la réception afin de synchroniser le boîtier récepteur sur le boîtier émetteur. Cette transmission directe de l'horloge est faite par disposition de l'horloge H entre les deux canaux EX et RX d'une liaison à une voie et, dans le cas d'une liaison à plusieurs voies montré sur la figure 2, entre deux canaux adjacents d'émission.

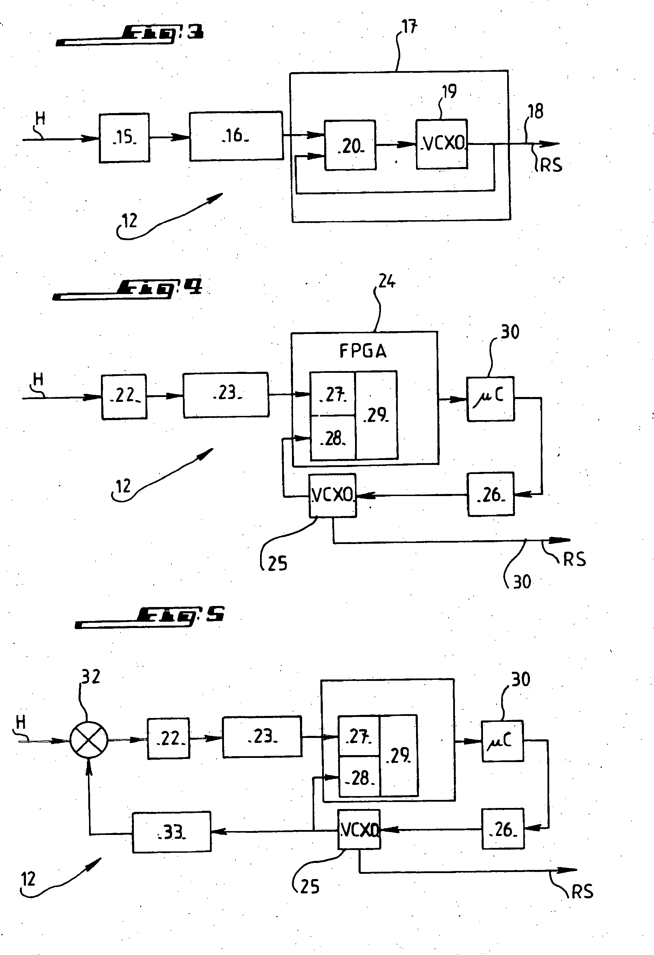

Les figures 3 à 6 illustrent plusieurs possibilités ou modes de réalisation du procédé selon l'invention, chacune consistant à envoyer directement l'horloge H du boîtier émetteur au boîtier récepteur et à la récupérer dans le boîtier de réception dans la bande RX.

Selon un premier mode de mise en oeuvre de l'invention, illustré à la figure 3, le signal pilote d'horloge H est émis par exemple par le boîtier 13, placé dans la bande d'émission EX, de la manière illustrée à la figure 2, et reçu dans le boîtier électronique 12 qui comporte à cette fin, à l'entrée un filtre 15, et successivement, le cas échéant, un pré-diviseur 16 destiné à effectué une division de la fréquence si celle-ci est trop haute et une boucle à verrouillage de phase 17 à la sortie 18 de laquelle est disponible le signal de référence RS synchronisé par l'horloge H et d'une grande pureté spectrale. La boucle de verrouillage 17 comporte à cette fin un oscillateur à cristal et à commande en tension, connu sous la dénomination VCXO, qui est commandé par un composant de boucle de verrouillage de phase 20 comportant deux entrées reliées respectivement au pré-diviseur 16 et à la sortie de l'oscillateur 19, c'est-à-dire la borne de sortie 18 de la référence RS.

Le dispositif selon la figure 3 prévoit un pré diviseur parce que la fréquence de la référence à la borne de sortie 18 ne doit pas dépasser quelques centaines de MHz.

Un troisième mode de réalisation mêlant les technologies numériques et analogiques est fondé sur l'envoi d'un signal pilote H et le comptage de la fréquence. Le dispositif de mise en oeuvre de ce procédé, comprend, comme le montre la figure 4 un filtre 22 du signal pilote en provenance de la boîte électronique 13 et positionné dans la bande d'émission, de la manière décrite plus haut, un convertisseur 23 qui accomplit la conversion du signal pilote de l'analogique au numérique, un composant à logique programmable 24, appelé FPGA, qui fait partie d'une boucle comportant en outre un composant oscillateur local 25 du type VCXO, c'est-à-dire à cristal et commande en tension, qui est commandé par un composant de commande 26 du type connu sous la dénomination DAC. Le composant reçoit des ordres d'un microprocesseur 30 dont l'entrée est reliée à la sortie du composant FPGA 24. Le microprocesseur pourrait aussi être intégré au FPGA. Comme on le voit sur la figure, ce composant FPGA comporte un premier compteur 27 destiné à compter les signaux numériques en provenance du convertisseur 23, un deuxième compteur 28 destiné à compter les signaux en provenance de l'oscillateur VCXO 25 ainsi qu'un circuit 29 de comparaison des résultats des deux compteurs 27 et 28, du type à boucle de verrouillage de fréquence dont le signal de sortie est appliqué au microprocesseur 30 qui donne des ordres à l'oscillateur local à synchroniser 25, par l'intermédiaire du circuit 26, le signal de référence synchronisé RS étant disponible à la sortie 30 de l'oscillateur VCXO 25.

Ce mode de réalisation présente l'avantage de séparer les domaines fréquentiels du pilote et de la référence. Dans le cas où la vitesse de fonctionnement du composant FPGA 24 ne permet qu'un fonctionnement à des fréquences inférieures au GHz, on passera par une fréquence intermédiaire pour augmenter la fréquence de travail.

La figure 5 illustre le dispositif de récupération de la référence synchronisée RS dans le cas d'une fréquence de pilote élevé, c'est-à-dire supérieur à la fréquence typique de fonctionnement d'un composant FPGA. A cette fin, le dispositif comporte, supplémentairement au dispositif selon la figure 4, en amont du filtre 22, un mélangeur 32 d'abaissement de la fréquence du signal pilote H et, monté entre ce mélangeur 32 et l'oscillateur local VCXO 25, un composant 33 qui comprend un second oscillateur du type VCO et une boucle de verrouillage de phase.

Le mélangeur 32 permet, d'une part, un filtrage plus aisé des signaux du pilote et, d'autre part, de travailler à une fréquence compatible avec le composant FPGA. Ce procédé permet d'obtenir une référence d'une très grande pureté spectrale et d'une très grande stabilité.

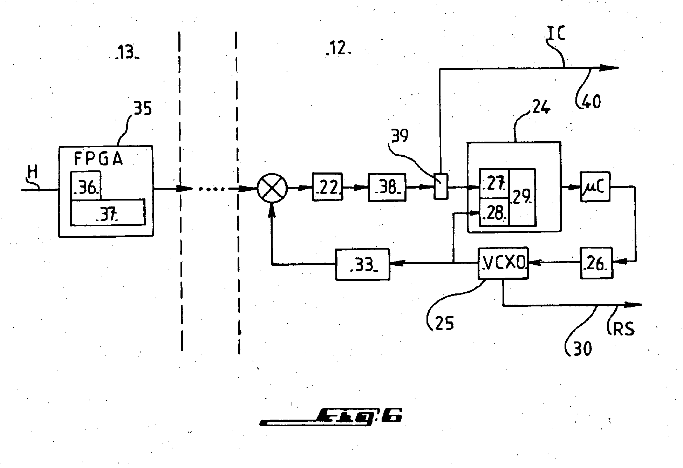

Un autre mode de réalisation, représenté à la figure 6 propose une architecture qui permet à la fois de synchroniser deux boîtiers électroniques avec une référence de très haute pureté spectrale tout en transmettant différentes informations. Ce procédé est purement numérique.

La figure 6 illustre ce procédé. On constate que l'architecture du dispositif du boîtier récepteur correspond à celle du mode de réalisation selon la figure 5. Mais, dans le boîtier émetteur 13, le pilote H est appliqué au composant FPGA noté 35 et compté par le compteur 36 et cette valeur de compteur est modulée sur le pilote et donc transmise numériquement au boîtier récepteur 12 sous forme de la modulation en amplitude du pilote.

A la réception, le pilote est transposé par le mélangeur 32 à un niveau de fréquences plus bas ce qui n'est cependant pas obligatoire dans le cas d'un calculateur très rapide. Puis le signal modulant est récupéré dans le démodulateur 38 et la valeur de compteur de la référence de synchronisation, c'est-à-dire du pilote est comparée dans le composant FPGA au compteur 28 de la référence produit par le composant VCXO 25. A partir de cette comparaison, un signal de commande est établit et appliqué à ce composant VCXO afin de corriger la fréquence de l'oscillateur local de celui-ci.

Ce mode de réalisation de l'invention permet de transmettre en plus de l'information du compte de la référence pilote de synchronisation d'autres informations, en incluant dans le composant FPGA du boîtier émetteur 13 dans une trame indiquée en 37 en plus d'un nombre de bits réservés à ce résultat de compte un nombre prédéterminé de bits d'autres informations. Ces informations de communication notées IC sont séparées en 39 de la valeur numérique du pilote H et disponibles à la borne 40. Ainsi, il est possible de transmettre dans la trame de communication des informations comme des alarmes, des données de contrôle, des protocoles de communication entre la station de base et l'équipement d'antenne ou tout autre protocole.

Ce mode de réalisation du procédé permet de s'affranchir complètement de la stabilité du pilote et d'une partie des parasites de la communication, dans la mesure où la fréquence du pilote n'intervient pas dans la synchronisation. Seule la valeur du compteur issu de la trame de communication intervient. La transmission des données de la trame ne perturbe en aucun cas le fonctionnement du système. Il est à noter que même la perte du signal de synchronisation pendant quelques trames n'entraîne aucune dégradation de la stabilité. La solution étant de nature numérique, un codage est aisément possible pour lutter contre le brouillage ou le piratage des données.

## Revendications

1. Procédé de synchronisation entre deux dispositifs électroniques d'une liaison de transmission sans fil (6) de signaux électriques et comportant au moins une voie comprenant un canal d'émission (EX) et un canal de réception (RX), les deux dispositifs (12, 13) étant inclus dans un réseau, notamment de téléphonie mobile, ledit réseau comprenant une antenne relais (5) et une baie de radiocommunication (7) à chacune desquelles est associé l'un des dispositifs (12, 13), selon lequel l'information de synchronisation est transmise d'un dispositif à l'autre, **caractérisé en ce que** l'on amène un (13) des dispositifs électroniques (12, 13) à transmettre directement l'information d'horloge (H) à l'autre dispositif (12) sous une forme numérique d'un signal pilote d'horloge (H) disposé entre lesdits canaux, et on utilise l'information d'horloge (H), après récupération, pour la synchronisation de la fréquence de référence (RS) du dispositif récepteur (12).

2. Procédé selon la revendication 1, **caractérisé en ce que** l'on établit dans le dispositif émetteur (13) la valeur numérique du signal pilote (H), module la valeur numérique sur ce signal pilote et transmet ce dernier modulé par sa valeur numérique au dispositif récepteur (12).

3. Procédé selon la revendication 2, **caractérisé en ce que** l'on module sur le signal pilote (H) une trame (37) comportant en plus de la valeur numérique du signal pilote (H) d'autres informations.

4. Procédé selon l'une des revendications précédentes, **caractérisé en ce que** la liaison de transmission sans fil (6) comporte une voie comprenant un canal d'émission (EX) et un canal de réception (RX) et **en ce que** la transmission directe de l'horloge (H) du dispositif émetteur (13) au dispositif récepteur (12) est faite par disposition de l'horloge (H) entre les deux canaux d'émission (EX) et de réception (RX) de la liaison (6) à une voie.

5. Procédé selon l'une des revendications précédentes, **caractérisé en ce que** la liaison de transmission sans fil (6) comporte plusieurs voies comprenant un canal d'émission (EX1 ; EX2 ;EX3) et un canal de réception (RX1 ; RX2 ; RX3), et **en ce que** la transmission directe de l'horloge (H) du dispositif émetteur (13) au dispositif récepteur (12) est faite par disposition de l'horloge (H) entre des canaux adjacents d'émission.

6. Système pour la mise en oeuvre du procédé selon l'une des revendications 1 à 5, **caractérisé en ce qu'**il comporte deux dispositifs électroniques (12,13) d'une liaison de transmission sans fil (6) de signaux électriques comprenant au moins une voie comportant un canal d'émission (EX) et un canal de réception (RX), un (13) des dispositifs électroniques (12, 13) étant agencé de sorte à transmettre directement l'information d'horloge (H) à l'autre dispositif (12) sous une forme numérique d'un signal pilote d'horloge (H) disposé entre lesdits canaux, l'autre (12) des dispositifs électroniques (12,13) étant agencé de sorte à récupérer l'information d'horloge (H) pour la synchronisation de la fréquence de référence (RS) du dispositif récepteur (12), le dispositif récepteur (12) comprenant en outre un composant d'oscillateur local (19, 25) générateur de la fréquence de référence (RS), qui est commandé par des moyens comparateurs du signal d'horloge (H) reçu audit signal de référence (RS).

7. Système selon la revendication 6, **caractérisé en ce que** le dispositif récepteur (12) comporte un convertisseur analogique numérique (23) et **en ce que** le composant de commande de l'oscillateur local (25) comporte des compteurs (27, 28) du signal d'horloge numérique et du signal de référence et des moyens comparateurs (29) des deux compteurs, l'oscillateur local (25) étant commandé par un signal établi à partir du résultat du comparateur.

8. Système selon la revendication 7, **caractérisé en ce que**, dans le cas d'un signal de fréquence de pilote élevée, le dispositif récepteur (12) comporte un mélangeur (32) dont l'oscillateur (33) est contrôlé à partir de l'oscillateur (25) générateur du signal de référence (RS).

9. Système selon la revendication 8, **caractérisé en ce que** le dispositif émetteur (13) comporte des moyens modulateurs du signal pilote d'horloge (H) par la valeur numérique du signal d'horloge et **en ce que** le dispositif récepteur (12) comporte des moyens démodulateurs (38).

10. Système selon la revendication 8 ou 9, **caractérisé en ce que** les moyens modulateurs du signal pilote sont adaptés pour moduler sur celui-ci une trame comportant d'autres informations en plus de la valeur numérique du signal d'horloge (H).

## Patentansprüche

1. Verfahren zur Synchronisierung einer drahtlosen Übertragungsverbindung (6) elektrischer Signale zwischen zwei elektronischen Geräten, die mindestens einen Pfad aufweist, der einen Sendekanal (EX) und einen Empfangskanal (RX) umfasst, wobei die zwei Vorrichtungen (12, 13) in einem Netzwerk, insbesondere der Mobiltelefonie, inbegriffen sind, wobei das Netzwerk eine Relaisantenne (5) und ein Funkkommunikationsrack (7) umfasst, denen jeweils eine der Vorrichtungen (12, 13) zugeordnet ist, wobei die Synchronisationsinformation von einer Vorrichtung zur anderen übertragen wird, **dadurch gekennzeichnet, dass** eine (13) der elektronischen Vorrichtung (12, 13) dazu gebracht wird, die Taktinformation (H) an die andere Vorrichtung (12) in einer digitalen Form eines Taktsteuersignals (H) direkt zu übertragen, das zwischen den Kanälen angeordnet ist, und die Taktinformation (H) nach Rückgewinnung für die Synchronisierung der Referenzfrequenz (RS) der Empfangsvorrichtung (12) verwendet wird.

2. Verfahren nach Anspruch 1, **dadurch gekennzeichnet, dass** der digitale Wert des Steuersignals (H) in der Sendevorrichtung (13) eingerichtet, der digitale Wert auf diesem Steuersignal moduliert und dieses Letztere, von seinem digitalen Wert moduliert, an die Empfangsvorrichtung (12) übertragen wird.

3. Verfahren nach Anspruch 2, **dadurch gekennzeichnet, dass** auf dem Steuersignal (H) ein Raster (37) moduliert wird, das neben dem digitalen Wert des Steuersignals (H) weitere Informationen aufweist.

4. Verfahren nach einem der vorangehenden Ansprüche, **dadurch gekennzeichnet, dass** die drahtlose Übertragungsverbindung (6) einen Pfad aufweist, der einen Sendekanal (EX) und einen Empfangskanal (RX) umfasst und dass die direkte Übertragung des Takts (H) von der Sendevorrichtung (13) an die Empfangsvorrichtung (12) durch die Taktvorrichtung (H) zwischen den zwei Kanälen der Sendung (EX) und des Empfangs (RX) der Einpfadverbindung (6) erfolgt.

5. Verfahren nach einem der vorangehenden Ansprüche, **dadurch gekennzeichnet, dass** die drahtlose Übertragungsverbindung (6) mehrere Pfade aufweist, die einen Sendekanal (EX1; EX2; EX3) und einen Empfangskanal (RX1; RX2; RX3) umfasst und dass die direkte Übertragung des Takts (H) von der Sendevorrichtung (13) an die Empfangsvorrichtung (12) durch Anordnung des Takts (H) zwischen benachbarten Sendekanälen erfolgt.

6. System zur Umsetzung des Verfahrens nach einem der Ansprüche 1 bis 5, **dadurch gekennzeichnet, dass** es zwei elektronische Geräten (12, 13) einer drahtlosen Übertragungsverbindung (6) elektrischer Signale aufweist, die mindestens einen Pfad umfasst, der einen Sendekanal (EX) und einen Empfangskanal (RX) aufweist, wobei eine (13) der elektronischen Vorrichtungen (12, 13) derart ausgebildet ist, dass die Taktinformation (H) an die andere Vorrichtung (12) in einer digitalen Form eines Taktsteuersignals (H), das zwischen den Kanälen angeordnet ist, direkt übertragen wird, wobei die andere (12) der elektronischen Vorrichtungen (12, 13) derart ausgebildet ist, dass die Taktinformation (H) für die Synchronisierung der Referenzfrequenz (RS) der Empfangsvorrichtung (12) restauriert wird, wobei die Empfangsvorrichtung (12) ferner eine lokale Oszillatorkomponente (19, 25) als Erzeuger der Referenzfrequenz (RS) umfasst, die von Vergleichsmitteln des im Referenzsignal (RS) empfangenen Taktsignals (H) gesteuert wird.

7. System nach Anspruch 6, **dadurch gekennzeichnet, dass** die Empfangsvorrichtung (12) einen Analog-DigitalWandler (23) aufweist und dass die Steuerkomponente des lokalen Oszillators (25) Zähler (27, 28) des digitalen Taktsignals und des Referenzsignals und Vergleichsmittel (29) der zwei Zähler aufweist, wobei der lokale Oszillator (25) von einem Signal gesteuert wird, das auf der Basis des Ergebnisses des Vergleichers festgelegt ist.

8. System nach Anspruch 7, **dadurch gekennzeichnet, dass** im Fall eines hohen Steuerfrequenzsignals die Empfangsvorrichtung (12) einen Mischer (32) aufweist, dessen Oszillator (33) auf der Basis des Oszillators (25) kontrolliert wird, der das Referenzsignal (RS) erzeugt.

9. System nach Anspruch 8, **dadurch gekennzeichnet, dass** die Sendevorrichtung (13) Modulationsmittel des Taktsteuersignals (H) durch den digitalen Wert des Taktsignals aufweist und dass die Empfangsvorrichtung (12) Demodulationsmittel (38) aufweist.

10. System nach Anspruch 8 oder 9, **dadurch gekennzeichnet, dass** die Modulationsmittel des Steuersignals angepasst sind, um auf diesem ein Raster zu modulieren, das neben dem digitalen Wert des Taktsignals (H) weitere Informationen aufweist.

## Claims

1. A synchronization method for two electronic devices over a wireless connection (6) for electrical signals and including at least one transmission channel (EX) and one receiving channel (RX), the two devices (12, 13) being included in a network, in particular a mobile telephone network, said network comprising a relay antenna (5) and a radio communication bay (7), with each of which one of the devices (12, 13) is associated, according to which the synchronization information is transmitted from one device to the other, **characterized in that** one (13) of the electronic devices (12, 13) is made to transmit the clock information (H) directly to the other device (12) in a digital form of a clock control signal (H) positioned between said channels, and the clock information (H) is used, after recovery, to synchronize the reference frequency (RS) of the receiving device (12).

2. The method according to claim 1, **characterized in that** the digital value of the control signal (H) is established in the transmitting device (13), the digital value is modulated on that control signal, and the latter is sent, modulated by its digital value, to the receiving device (12).

3. The method according to claim 2, **characterized in that** a frame (37) is modulated on the control signal (H), that frame including other information in addition to the digital value of the control signal (H).

4. The method according to one of the preceding claims, **characterized in that** the wireless connection (6) includes a path comprising a transmission channel (EX) and a receiving channel (RX) and **in that** the direct transmission of the clock (H) from the transmitting device (13) to the receiving device (12) is done by positioning the clock (H) between the two transmission (EX) and receiving (RX) channels of the connection (6) to a path.

5. The method according to one of the preceding claims, **characterized in that** the wireless connection (6) includes several paths comprising a transmission channel (EX1; EX2; EX3) and a receiving channel (RX1; RX2; RX3), and **in that** the direct transmission of the clock (H) from the transmitting device (13) to the receiving device (12) is done by positioning the clock (H) between two adjacent transmission channels.

6. A system for implementing the method according to one of claims 1 to 5, **characterized in that** it includes two electronic devices (12, 13) of a wireless transmission connection (6) for electrical signals comprising at least one path including a transmission channel (EX) and a receiving channel (RX), one (13) of the electronic devices (12, 13) being arranged so as to transmit clock information (H) directly to the other device (12) in a digital form of a clock control signal (H) positioned between said channels, the other (12) of the electronic devices (12, 13) being arranged so as to recover the clock information (H) for synchronization of the reference frequency (RS) of the receiving device (12), the receiving device (12) further comprising a local oscillator component (19, 25) generating the reference frequency (RS), which is controlled by means for comparing the received clock signal (H) to said reference signal (RS).

7. The system according to claim 6, **characterized in that** the receiving device (12) includes an analog digital converter (23) and **in that** the control component of the local oscillator (25) includes counters (27, 28) of the digital clock signal and the reference signal and comparator means (29) for comparing the two counters, the local oscillator (25) being commanded by a signal established from the result of the comparator.

8. The system according to claim 7, **characterized in that**, in the case of a high control frequency signal, the receiving device (12) includes a mixer (32) whereof the oscillator (33) is controlled from the oscillator (25) generating the reference signal (RS).

9. The system according to claim 8, **characterized in that** the transmitting device (13) includes means for modulating the clock control signal (H) by the digital value of the clock signal and **in that** the receiving device (12) includes the modulating means (38).

10. The system according to claim 8 or 9, **characterized in that** the means for modulating the control signal are suitable for modulating a frame on the latter including other information in addition to the digital value of the clock signal (H).
